# EUROPEAN PATENT APPLICATION

(11) **EP 4 718 707 A1**
(43) Date of publication of application: **01.04.2026**
(21) Application number: 25201537.5
(22) Date of filing: 11.09.2025
(51) Int. Cl.: H02M 7/5387, H02M 3/156, H02M 3/158, H02M 1/00, H02M 1/32, H02M 1/36, H02S 40/30, H02S 40/32

(54) **INVERTER AND INVERTER CONTROL METHOD**

(30) Priority: 26.09.2024 CN 202411358448
(71) Applicant: Huawei Digital Power Technologies Co., Ltd., Shenzhen, Guangdong 518043 (CN)
(72) Inventor: Yin, Jian, Shenzhen, 518043 (CN); Zhou, Jie, Shenzhen, 518043 (CN); Gu, Guilei, Shenzhen, 518043 (CN)
(74) Representative: Epping - Hermann - Fischer

(57) **Abstract**

This application provides an inverter and an inverter control method. The inverter includes a plurality of direct current boost circuits, a direct current bus, and an inverter circuit. The plurality of direct current boost circuits each are configured to receive a direct current input from an optimizer, and output the direct current input from the optimizer to the inverter circuit through the direct current bus. The inverter circuit is configured to receive direct current inputs from the plurality of direct current boost circuits, and output the direct current inputs from the plurality of direct current boost circuits to a load or a grid. When the plurality of direct current boost circuits work in an MPPT state, if input voltages of n direct current boost circuits in the plurality of direct current boost circuits are all greater than or equal to a first threshold, a controller controls switching transistors in m direct current boost circuits in the n direct current boost circuits to keep turned off. m and n are integers greater than 0. n ≥ m. The first threshold is greater than or equal to a minimum voltage limit of the direct current bus.

## Description

### TECHNICAL FIELD

This application relates to the technical field of power electronics, and in particular, to an inverter and an inverter control method.

### BACKGROUND

In a conventional photovoltaic power generation system, photovoltaic modules are directly connected in series and then connected to an input end of an inverter in a form of a string. If one module in a string is shaded, the other modules in the string are affected, resulting in an overall decrease in an energy yield of the string.

In an optimizer-based photovoltaic power generation system, one or more photovoltaic modules are first connected to corresponding optimizers. Outputs of a plurality of optimizers are connected in series to form an optimizer string and then connected to an input end of an inverter. An optimizer performs maximum power point tracking (Maximum Power Point Tracking, MPPT), so that a module connected to the optimizer maintains maximum power generation without being affected if another module connected to the same optimizer string is shaded by foreign matter. An optimizer-based photovoltaic power generation technology can effectively prevent an energy yield loss caused by partial module shading, an irradiation difference, a module characteristic difference, or the like. It is a photovoltaic power generation solution that enables each module in the system to always operate at a maximum output power point. An inverter operating in the optimizer-based photovoltaic power generation system is referred to as an optimizer-based photovoltaic inverter. Direct current/direct current (Direct Current to Direct Current, DC/DC) power conversion is performed within a two-stage optimizer-based photovoltaic inverter. An optimizer can flexibly adapt to a complex working condition provided that it has a buck regulation capability. The optimizer is simple to implement and has low costs and high operating efficiency. However, the two-stage optimizer-based photovoltaic inverter has high implementation complexity, high costs, and low operating efficiency. How to improve the operating efficiency of the two-stage optimizer-based photovoltaic inverter is an urgent problem to be resolved.

### SUMMARY

This application provides an inverter and an inverter control method. The inverter can have higher operating efficiency when using a two-stage architecture and operating in an optimizer-based photovoltaic power generation system.

According to a first aspect, this application provides an inverter, including a plurality of direct current boost circuits, a direct current bus, an inverter circuit, and a controller. Each of the plurality of direct current boost circuits is configured to receive a direct current input from an optimizer connected to one or more photovoltaic modules, perform boost power conversion on the direct current input from the optimizer, and output a converted direct current to the inverter circuit through the direct current bus. The inverter circuit is configured to receive direct current inputs from the plurality of direct current boost circuits, convert the direct current inputs from the plurality of direct current boost circuits into an alternating current, and output the alternating current to a load or a grid. The controller is configured to: when the plurality of direct current boost circuits work in an MPPT state, if input voltages of n direct current boost circuits in the plurality of direct current boost circuits are all greater than or equal to a first threshold, control switching transistors in m direct current boost circuits in the n direct current boost circuits to keep turned off. m and n are integers greater than 0. n ≥ m. The first threshold is greater than or equal to a minimum voltage limit of the direct current bus. Because the inverter uses a two-stage architecture, when input voltages of some direct current boost circuits are sufficiently high, direct current boost circuits whose input voltages are greater than or equal to the first threshold and direct current boost circuits whose input voltages are less than the first threshold are grouped. The direct current boost circuits whose input voltages are greater than or equal to the first threshold may be enabled to stop performing power conversion, that is, switching transistors in these direct current boost circuits are turned off. In this way, a direct current input from the optimizer directly flows to the direct current bus, to eliminate a power loss of these direct current boost circuits and improve overall working efficiency of the inverter.

In an implementation, the m direct current boost circuits include a first direct current boost circuit and a direct current boost circuit whose input voltage differs from an input voltage of the first direct current boost circuit by an absolute value less than or equal to a second threshold in the n direct current boost circuits. The first direct current boost circuit is a direct current boost circuit with a highest input voltage in the n direct current boost circuits.

When switching transistors in several direct current boost circuits whose input voltages are the highest and similar are selected to keep turned off, a power loss caused by power conversion performed by the direct current boost circuits can be minimized. In addition, these direct current boost circuits have similar impact on fluctuation in a voltage of the direct current bus, so that the inverter can stabilize more quickly in a new working condition.

In an implementation, the controller is further configured to: when a switching transistor in any one of the plurality of direct current boost circuits keeps turned off, control the inverter circuit to work in the MPPT state.

After switching transistors in some direct current boost circuits in the inverter keep turned off, these direct current boost circuits stop performing power conversion, that is, stop performing MPPT. In this case, to enable a sum of powers input from optimizers corresponding to these direct current boost circuits to reach a maximum value, the inverter circuit is enabled to perform MPPT, so that the sum of the powers input from the optimizers corresponding to these direct current boost circuits continues to be maintained at the maximum value. In addition, in a process in which the inverter circuit performs MPPT, the voltage of the direct current bus finally stabilizes around a lowest voltage in voltages corresponding to maximum power points in the direct current boost circuits. In this case, a reduction in the voltage of the direct current bus, which equates to a lower input voltage of the inverter circuit, reduces a power conversion loss of the inverter circuit, thereby improving the overall working efficiency of the inverter.

In an implementation, the controller is configured to: when controlling the inverter circuit to work in the MPPT state, if a difference between the voltage of the direct current bus and the first threshold is less than or equal to a third threshold for a period of time greater than or equal to a first time threshold, control the inverter circuit to exit the MPPT state and the m direct current boost circuits to work in the MPPT state.

When the inverter circuit performs MPPT, the direct current bus finally stabilizes around the lowest voltage in the voltages corresponding to the maximum power points in the direct current boost circuits. When the lowest voltage is less than or equal to the minimum voltage limit of the direct current bus, the voltage of the direct current bus approaches the minimum voltage limit of the direct current bus, namely, the first threshold. If the difference between the voltage of the direct current bus and the first threshold is small for a long time, it may be considered that voltages input from some optimizers are low and they do not work at a maximum output power point. In this case, all direct current boost circuits are enabled to work in the MPPT state again, and the inverter circuit is enabled to exit the MPPT state, to ensure that the entire inverter performs maximum power output again. In addition, the controller re-enters the foregoing determining logic to redetermine, for a latest working condition, whether to enable at least one or all of the direct current boost circuits to exit the MPPT state.

In an implementation, the controller is configured to control an absolute value of a difference between the input voltage of the direct current boost circuit working in the MPPT state and the voltage of the direct current bus to be greater than or equal to a fourth threshold. The fourth threshold is greater than or equal to a minimum voltage difference limit of the direct current boost circuit.

It should be understood that an input voltage and an output voltage of a direct current boost circuit may have a minimum voltage difference limit during actual application due to a minimum duty cycle of a power device in the circuit or the like. In other words, a difference between the input voltage of the direct current boost circuit and the voltage of the direct current bus has a minimum voltage difference limit. If the difference is less than the minimum voltage difference limit, the direct current boost circuit cannot normally work.

In an implementation, the controller is configured to: when the absolute value of the difference between the input voltage of the direct current boost circuit working in the MPPT state and the voltage of the direct current bus is greater than or equal to the fourth threshold and less than or equal to a fifth threshold for a period of time greater than or equal to a second time threshold, control the m direct current boost circuits to work in the MPPT state and the inverter circuit to exit the MPPT state.

If a voltage difference of the direct current boost circuit is close to the minimum voltage difference limit for a long time, it may be considered that a maximum power point of the direct current boost circuit may be at a position with a higher voltage. However, due to the minimum voltage difference limit, a voltage of the direct current boost circuit cannot reach the maximum power point. In this case, all direct current boost circuits are enabled to work in the MPPT state again, and the inverter circuit is enabled to exit the MPPT state, to ensure that the entire inverter performs maximum power output again. In addition, the controller re-enters determining logic in the foregoing embodiments to redetermine, for a latest working condition, whether to enable at least one or all of the direct current boost circuits to exit the MPPT state, to ensure optimal power generation efficiency in a new working condition.

In an implementation, when controlling the switching transistors in the m direct current boost circuits to keep turned off for a period of time greater than or equal to a third time threshold, the controller controls the m direct current boost circuits to work in the MPPT state and the inverter circuit to exit the MPPT state.

After duration for which at least one or all of the direct current boost circuits in the inverter exit the MPPT state exceeds a preset fixed period of time, the controller re-enters the foregoing determining logic, so that the controller can determine, for a latest working condition, whether to enable at least one or all of the direct current boost circuits to exit the MPPT state, to ensure optimal power generation efficiency in a new working condition.

In an implementation, working in the MPPT state is implemented through a perturbation method.

The perturbation method is a common method for performing MPPT. When MPPT is performed through the perturbation method, the controller gradually decreases a voltage input by the optimizer from an open-circuit voltage of the optimizer, to find a maximum power point of the optimizer. During this period, the voltage does not jump in large steps, to avoid dropping below the minimum voltage limit of the direct current bus, the minimum voltage difference limit of a direct current conversion circuit, or the like in a specific working condition. The perturbation method can efficiently cooperate with control logic in the foregoing embodiments.

According to a second aspect, this application provides an inverter control method. An inverter includes a plurality of direct current boost circuits, a direct current bus, and an inverter circuit. Each of the plurality of direct current boost circuits is configured to receive a direct current input from an optimizer connected to one or more photovoltaic modules, perform boost power conversion on the direct current input from the optimizer, and output a converted direct current to the inverter circuit through the direct current bus. The inverter circuit is configured to receive direct current inputs from the plurality of direct current boost circuits, convert the direct current inputs from the plurality of direct current boost circuits into an alternating current, and output the alternating current to a load or a grid. The method includes: when the plurality of direct current boost circuits work in an MPPT state, if input voltages of n direct current boost circuits in the plurality of direct current boost circuits are all greater than or equal to a first threshold, controlling switching transistors in m direct current boost circuits in the n direct current boost circuits to keep turned off. m and n are integers greater than 0. n ≥ m. The first threshold is greater than or equal to a minimum voltage limit of the direct current bus.

In an implementation, the m direct current boost circuits include a first direct current boost circuit and a direct current boost circuit whose input voltage differs from an input voltage of the first direct current boost circuit by an absolute value less than or equal to a second threshold in the n direct current boost circuits. The first direct current boost circuit is a direct current boost circuit with a highest input voltage in the n direct current boost circuits.

In an implementation, when a switching transistor in any one of the plurality of direct current boost circuits keeps turned off, the inverter circuit is controlled to work in the MPPT state.

In an implementation, when the inverter circuit is controlled to work in the MPPT state, if a difference between a voltage of the direct current bus and the first threshold is less than or equal to a third threshold for a period of time greater than or equal to a first time threshold, the inverter circuit is controlled to exit the MPPT state and the m direct current boost circuits are controlled to work in the MPPT state.

In an implementation, an absolute value of a difference between the input voltage of the direct current boost circuit working in the MPPT state and the voltage of the direct current bus is controlled to be greater than or equal to a fourth threshold. The fourth threshold is greater than or equal to a minimum voltage difference limit of the direct current boost circuit.

In an implementation, when the absolute value of the difference between the input voltage of the direct current boost circuit and the voltage of the direct current bus is greater than or equal to the fourth threshold and less than or equal to a fifth threshold for a period of time greater than or equal to a second time threshold, the m direct current boost circuits are controlled to work in the MPPT state and the inverter circuit is controlled to exit the MPPT state.

In an implementation, when the switching transistors in the m direct current boost circuits are controlled to keep turned off for a period of time greater than or equal to a third time threshold, the m direct current boost circuits are controlled to work in the MPPT state and the inverter circuit is controlled to exit the MPPT state.

In an implementation, control of working in the MPPT state is implemented through a perturbation method.

It should be understood that mutual reference may be made to the implementations and beneficial effects of the foregoing aspects of this application.

### BRIEF DESCRIPTION OF DRAWINGS

FIG. 1 is a diagram of a connection of an optimizer string according to this application;
FIG. 2 is a diagram of a connection of a single-stage inverter according to this application;
FIG. 3 is a diagram of a connection of a two-stage inverter according to this application;
FIG. 4 is a schematic of a topology of a direct current boost circuit according to this application;
FIG. 5 is a diagram of an output P-V curve of an optimizer according to this application;
FIG. 6 is a diagram of output P-V curves of optimizers according to this application;
FIG. 7 is a diagram of output P-V curves of optimizers according to this application;
FIG. 8 is a diagram of output P-V curves of optimizers according to this application;
FIG. 9 is a diagram of output P-V curves of optimizers according to this application; and
FIG. 10 is a schematic flowchart of inverter control according to this application.

### DESCRIPTION OF EMBODIMENTS

To make the objectives, features, and advantages of this application clearer and more comprehensible, this application is further described in detail below with reference to the accompanying drawings and specific implementations. "One embodiment" or "embodiment" herein refers to a specific feature, structure, or characteristic that may be included in at least one implementation of this application. "In one embodiment" appearing in different places in this specification does not refer to a same embodiment, and is not a separate or selective embodiment that is mutually exclusive with another embodiment. Unless otherwise specified, in this specification, the words "connect", "connecting", and "connection" that indicate an electrical connection all indicate a direct or indirect electrical connection.

The following terms "first", "second", and the like are merely used for description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise stated, "a plurality of" means two or more.

The technical solutions provided in embodiments of this application are applicable to different application scenarios, and are particularly applicable to application scenarios in which an optimizer-based photovoltaic power generation system is used, such as an industrial and commercial distributed power station and a home photovoltaic power generation system.

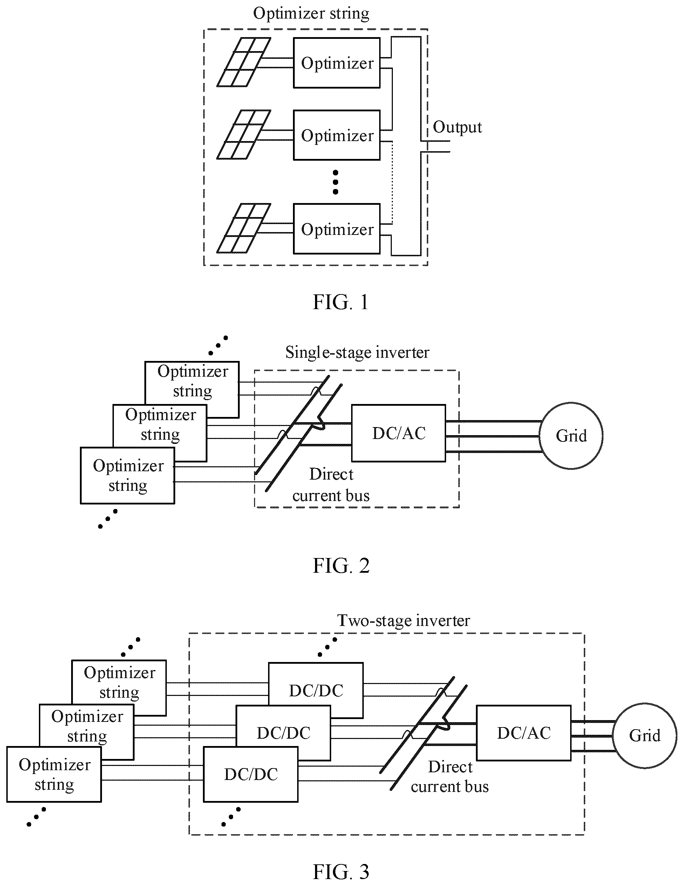

To facilitate understanding of the technical solutions provided in embodiments of this application, the following describes specific application of the technical solutions provided in embodiments of this application by selecting one of the scenarios. FIG. 1 shows a connection manner of an optimizer and a connection form of an optimizer string according to an embodiment of this application. As shown in FIG. 1, one optimizer is connected to one photovoltaic module. The photovoltaic module is directly connected to an input end of the optimizer. An output end of the optimizer may be directly connected to a next-stage power electronic device. Alternatively, in a form shown in FIG. 1, the optimizer is first connected in series to another optimizer and then connected to a next-stage power electronic device, for example, an inverter.

FIG. 2 shows a connection form between a single-stage inverter and optimizers. A power conversion circuit in the single-stage inverter includes only an inverter circuit. The optimizers are first connected to form an optimizer string, and then connected to the inverter. Electric energy provided by the optimizer string is transmitted to the inverter circuit, namely, a DC/AC circuit, through a direct current bus in the inverter. An alternating current output end of the inverter circuit is connected to a grid.

FIG. 3 shows a connection form between a two-stage inverter and optimizers. A power conversion circuit in the two-stage inverter includes an inverter circuit and a direct current/direct current conversion circuit. The optimizers are first connected to form an optimizer string, and then connected to the inverter. Electric energy provided by the optimizer string passes through the direct current/direct current conversion circuit in the inverter, namely, a DC/DC circuit. The direct current/direct current conversion circuit transmits the electric energy to the inverter circuit through a direct current bus. An alternating current output end of the inverter circuit is connected to a grid. A two-stage architecture provides greater flexibly in adjusting power conversion within the inverter. The technical solutions of this application are mainly designed based on an architecture of the two-stage inverter. It may be understood that the two-stage inverter may alternatively be designed as a multi-stage inverter. The multi-stage inverter has a plurality of direct current/direct current conversion circuits. They cooperate with each other to perform direct current/direct current conversion on input direct currents, and then output converted direct currents to the inverter circuit through the direct current bus. A working mode of the direct current/direct current conversion circuit in the two-stage inverter in embodiments of this application may alternatively be an equivalent working mode formed by the plurality of direct current/direct current conversion circuits in the multi-stage inverter that work cooperatively.

It should be understood that the output end of the inverter circuit may alternatively be directly connected to a load. In embodiments of this application, an example in which a direct current buck circuit is used in the optimizer and the direct current/direct current conversion circuit in the inverter is a direct current boost circuit is used for description.

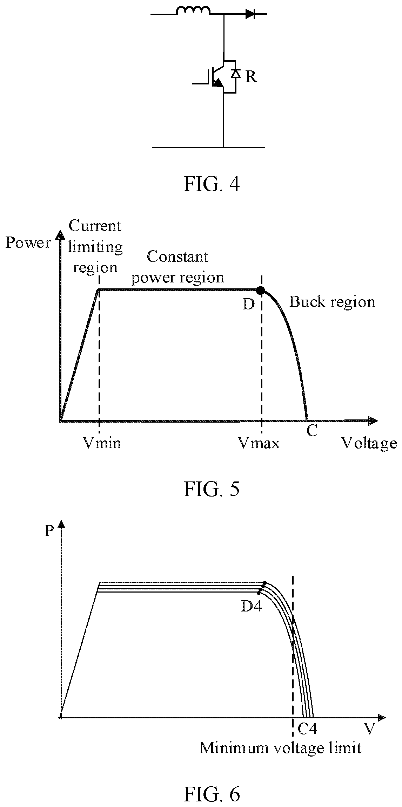

In an implementation, a direct current buck circuit is used in the optimizer, the inverter is a two-stage inverter, and the direct current/direct current conversion circuit in the inverter is a direct current boost circuit. In this way, the optimizer and the direct current/direct current conversion circuit in the inverter can cooperate with each other to provide an appropriate voltage for the direct current bus. In addition, working in an MPPT state enables the inverter to continuously and stably maintain a maximum power output. FIG. 4 is a schematic of a topology of a direct current boost circuit according to an embodiment of this application. In a process in which the direct current boost circuit performs power conversion, a switching transistor R continuously performs an on-off action, to perform boost power conversion on a voltage input from an optimizer and then output a converted voltage to the inverter circuit through the direct current bus. In the following embodiments of this application, the technical solutions are described based on this implementation.

FIG. 5 is a diagram of an output P-V curve of an optimizer according to an embodiment of this application. As shown in FIG. 5, an output power curve of the optimizer is generally divided into a current limiting region, a constant power region, and a buck region. In the current limiting region, starting from a voltage of 0, a higher output voltage of the optimizer indicates a higher output power of the optimizer. In the constant power region, an output power of the optimizer remains at a maximum value. In the buck region, starting from an open-circuit voltage, a lower output voltage of the optimizer indicates a higher output power of the optimizer. It can be learned that a maximum output power can be maintained provided that an output voltage of the optimizer is between a minimum voltage Vmin and a maximum voltage Vmax in the constant power region.

In an embodiment, a direct current/direct current conversion circuit in an inverter works in an MPPT state. The direct current/direct current conversion circuit in this state adjusts its working state in real time, to change an input voltage it receives, that is, change an output voltage of an optimizer connected to it, so that an output power of the optimizer reaches a maximum value. Generally, the direct current/direct current conversion circuit performs MPPT from startup. Specifically, the direct current/direct current conversion circuit performs MPPT through a perturbation method. In this process, the direct current/direct current conversion circuit makes its input voltage slightly perturbed leftward or rightward. A perturbation direction is changed based on a change in an input power. For example, after the input voltage is perturbed leftward, that is, after the input voltage is decreased, if the input power increases, the input voltage continues to be perturbed leftward; or if the input power decreases or remains unchanged, the input voltage is perturbed rightward, to find a maximum power point and stabilize around the maximum power point. A feedback adjustment form of rightward perturbation is similar to that of leftward perturbation. From startup, the direct current/direct current conversion circuit gradually decreases its input voltage from an open-circuit voltage, to find the maximum power point and stabilize around the maximum power point. In other words, from startup, the direct current/direct current conversion circuit gradually decreases an output voltage of the optimizer from the open-circuit voltage shown in FIG. 5, namely, a voltage corresponding to a point C, to a value around a maximum power point D, to maintain a maximum power output.

It should be noted that the optimizer in the foregoing embodiments may be a single optimizer or a plurality of optimizers. The direct current/direct current conversion circuit is connected to the plurality of optimizers as mentioned in the foregoing embodiments. The plurality of optimizers are first connected to form an optimizer string and then connected to the direct current/direct current conversion circuit. This understanding is also used for the optimizer mentioned below.

In the following embodiments, an example in which a circuit topology in an optimizer is a direct current buck circuit and a direct current/direct current conversion circuit in an inverter is a direct current boost circuit is used for description. However, it should be understood that embodiments of this application are not limited to this scenario, provided that an output P-V curve of the optimizer has a similar feature and the direct current/direct current conversion circuit in the inverter has a similar MPPT function. Further, in the following embodiments, an example in which the inverter includes four direct current/direct current conversion circuits is used for description.

FIG. 6 shows output P-V curves of optimizers correspondingly connected to four direct current boost circuits in an inverter according to an embodiment of this application. For brevity of the figure, only a P-V curve with a maximum power point corresponding to a minimum voltage and power is marked for description. For understanding of maximum power points and open-circuit voltages of the other P-V curves, refer to the marked P-V curve. In an implementation scenario in FIG. 6, voltages corresponding to maximum power points D1 to D4 (D1 to D3 are not shown) of the optimizers that correspond to the four direct current boost circuits are all less than a minimum voltage limit of a direct current bus. In this implementation scenario in FIG. 6, the direct current boost circuit in the inverter needs to perform boosting, so that a voltage output by the direct current boost circuit can meet a requirement for a minimum voltage of the direct current bus, that is, a voltage of the direct current bus is greater than or equal to the minimum voltage limit. In this working condition, the direct current boost circuit performs MPPT starting from an open-circuit voltage. However, due to existence of the minimum voltage limit that is greater than the voltage corresponding to the maximum power point, the direct current boost circuit cannot continue to perturb the voltage leftward (decrease the voltage) to find the maximum power point. An input voltage of the direct current boost circuit is finally limited to a value close to the minimum voltage limit. It should be understood that the minimum voltage limit of the direct current bus is determined by an alternating current voltage of a grid or a load to which an inverter circuit is connected.

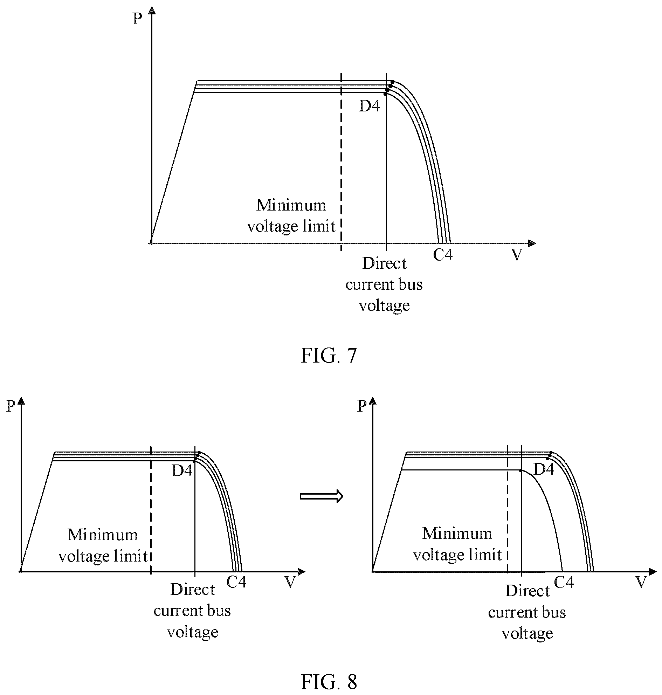

FIG. 7 shows output P-V curves of optimizers correspondingly connected to four direct current boost circuits in another inverter including four direct current boost circuits according to an embodiment of this application. As shown in FIG. 7, voltages corresponding to maximum power points D1 to D4 (D1 to D3 are not shown) are all greater than a minimum voltage limit of a direct current bus. In this case, the direct current boost circuit in the inverter does not need to perform boosting, and a voltage output by the direct current boost circuit can meet a requirement for a minimum voltage of the direct current bus. In this case, the direct current boost circuit may not perform power conversion, that is, a switching transistor in the direct current boost circuit stops performing an on-off action and keeps turned off. In an implementation scenario shown in FIG. 7, electric energy input from the optimizer is directly transmitted to the direct current bus through the direct current boost circuit. Therefore, a working mode of the direct current boost circuit in this case is also referred to as a pass-through mode. In this case, the inverter circuit performs MPPT. Specifically, a controller controls the inverter circuit to adjust an input voltage of the inverter circuit, that is, adjust a voltage of the direct current bus to find a maximum power point, to maximize a sum of output powers of the four optimizers. Similarly, the controller controls, through a perturbation method, the inverter circuit to find a maximum value of the sum of the output powers of the four optimizers leftward, that is, controls the voltage of the direct current bus to decrease from an open-circuit voltage to the voltage corresponding to the maximum power point D4. Then, when the voltage of the direct current bus continues to decrease, the sum of the output powers of the four optimizers does not continue to increase. Therefore, the voltage of the direct current bus finally remains close to a voltage at a maximum power point corresponding to an optimizer with a smallest maximum output power in the four optimizers. As shown in FIG. 7, the inverter circuit adjusts the voltage of the direct current bus to maintain the voltage of the direct current bus at the voltage corresponding to the maximum power point D4, so that each optimizer works in a constant power region, to maximize the sum of the output powers of the optimizers. In this case, the inverter can not only maintain a maximum power output, but also reduce a loss by keeping the switching transistor in the direct current boost circuit turned off. It should be understood that in this working condition, alternatively, at least one direct current boost circuit, for example, one, two, or three direct current boost circuits, may stop working, and the other direct current boost circuits continue to perform MPPT. This working mode in which at least one or all of the direct current boost circuits do not work and the inverter circuit performs MPPT based on a value of the input voltage is referred to as an optimization mode.

In an implementation, when the plurality of direct current boost circuits in the inverter work in an MPPT state, if input voltages of n direct current boost circuits in the plurality of direct current boost circuits are all greater than or equal to a first threshold, the controller (not shown in the accompanying drawings) in the inverter controls switching transistors in m direct current boost circuits in the n direct current boost circuits to keep turned off. m and n are integers greater than 0. n ≥ m. The first threshold is greater than or equal to the minimum voltage limit of the direct current bus. As shown in FIG. 7, for example, the first threshold is equal to the minimum voltage limit of the direct current bus. The inverter has four direct current boost circuits. Input voltages of the four direct current boost circuits are all greater than the first threshold (n = 4). The controller in the inverter controls switching transistors in one or more of the n direct current boost circuits to keep turned off (1 ≤ m ≤ 4). In this case, the input voltage of the direct current boost circuit in which the switching transistor keeps turned off is directly output to the direct current bus. Because the input voltage is greater than the minimum voltage limit of the direct current bus, the inverter circuit at a next stage can normally work, and a working loss of the direct current boost circuit can be eliminated.

It should be understood that during actual application, the first threshold may alternatively be set to a value greater than the minimum voltage limit, to provide some safety margins. A value of the minimum voltage limit is not specifically limited in embodiments of this application. For ease of description, an example in which the first threshold is equal to the minimum voltage limit is used in this application.

For how to determine the m direct current boost circuits to stop performing power conversion from the n direct current boost circuits whose input voltages are all greater than or equal to the first threshold, there may be specifically the following several possible implementations.

In an implementation, the input voltages of the n direct current boost circuits in the plurality of direct current boost circuits in the inverter are all greater than or equal to the first threshold, and the switching transistors in the m direct current boost circuits in the n direct current boost circuits are controlled to keep turned off. The m direct current boost circuits selected herein are direct current boost circuits corresponding to input voltages ranking 1^{st} to m^{th} in descending order in the n direct current boost circuits, namely, direct current boost circuits whose input voltages rank in the top m. It may be understood that a higher input voltage of the direct current boost circuit indicates a larger power loss. Therefore, controlling the switching transistors in the direct current boost circuits whose input voltages rank in the top m to keep turned off can better reduce a working loss.

In another embodiment, the input voltages of the n direct current boost circuits in the plurality of direct current boost circuits in the inverter are all greater than or equal to the first threshold, and the switching transistors in the m direct current boost circuits in the n direct current boost circuits are controlled to keep turned off. The m direct current boost circuits selected herein are direct current boost circuits whose input voltages rank in the top m in the n direct current boost circuits. In addition, a difference between input voltages of a direct current boost circuit with a highest input voltage and a direct current boost circuit with a lowest input voltage in these direct current boost circuits needs to be less than or equal to a second threshold. It may be understood that when there is a small difference between the input voltages of the direct current boost circuit with the highest input voltage and the direct current boost circuit with the lowest input voltage, these direct current boost circuits have similar working conditions. In this way, when the controller controls the switching transistors in these direct current boost circuits to keep turned off, impact on the voltage of the direct current bus is consistent. When the inverter circuit performs MPPT to find a maximum power point, it is easier to obtain a result with better efficiency.

The foregoing describes two working modes. Further, after the inverter works in optimization mode for a period of time, a photovoltaic power generation environment may change, and the optimization mode may no longer be a working mode with highest efficiency in a new working condition. In this case, the inverter needs to work in normal mode again, that is, all direct current boost circuits in the inverter perform MPPT again. In this case, the controller in the inverter redetermines, based on the new working condition, whether to control at least one or all of the direct current boost circuits to work in pass-through mode, so that the inverter works in optimization mode again, to ensure that the working mode of the inverter is an optimal mode in a latest working condition.

With reference to FIG. 8, in a possible implementation scenario, when an energy yield of a photovoltaic module connected to an optimizer with a minimum output power decreases due to shading or the like, an output P-V curve of the optimizer changes accordingly. As shown in the figure, an output voltage corresponding to a maximum power point D4 on the P-V curve corresponding to the optimizer decreases, that is, the voltage of the direct current bus decreases accordingly, so that the voltage of the direct current bus gradually approaches the minimum voltage limit. In this case, if the inverter circuit continues to perform MPPT, and switching transistors in at least one or all of the direct current boost circuits keep turned off, the inverter may abnormally work due to an insufficient voltage of the direct current bus. Therefore, in this case, the inverter needs to exit the optimization mode.

In an implementation, when controlling the switching transistors in the m direct current boost circuits in the inverter to keep turned off and the inverter circuit to work in the MPPT state, if a difference between the voltage of the direct current bus and the first threshold is less than or equal to a third threshold for a period of time greater than or equal to a first time threshold, the controller in the inverter controls the inverter circuit to exit the MPPT state and the m direct current boost circuits to work in the MPPT state. In this way, if the voltage of the direct current bus is close to the minimum voltage limit for a long time, it is considered that the voltage at the maximum power point found by the inverter circuit is actually below the minimum voltage limit. In this case, at least one or all of the direct current boost circuits are no longer enabled to work in pass-through mode, and the inverter is enabled to work in normal mode. That is, all direct current boost circuits are enabled to perform MPPT again. The controller in the inverter determines, based on a new working condition, whether to enable at least one or all of the direct current boost circuits to work in pass-through mode. This ensures that the inverter properly works in optimization mode, to achieve optimal efficiency.

It should be understood that during actual application, the third threshold may alternatively be set to be equal to the first threshold, to increase a requirement for exiting the optimization mode, and prevent frequent exit caused by an excessively loose exit condition. A value of the third threshold is not specifically limited in embodiments of this application. For ease of description, an example in which the third threshold is equal to the first threshold, that is, equal to the minimum voltage limit, is used in this application.

In addition to considering adverse impact of the voltage of the direct current bus close to the minimum voltage limit, in some working conditions, whether a difference between an input voltage and an output voltage of a direct current boost circuit is sufficient for the direct current boost circuit to normally work further needs to be considered. If the difference between the input voltage and the output voltage of the direct current boost circuit is excessively small, that is, less than a minimum voltage difference limit, the controller cannot drive a switching transistor in the direct current boost circuit to normally perform an on-off action.

In an embodiment, the controller in the inverter is further configured to control an absolute value of a difference between the input voltage of the direct current boost circuit working in the MPPT state and the voltage of the direct current bus to be greater than or equal to a fourth threshold. The fourth threshold is greater than or equal to a minimum voltage difference limit of the direct current boost circuit, to ensure that the direct current boost circuit can normally work. A value of the fourth threshold is not specifically limited in embodiments of this application. For ease of description, an example in which the fourth threshold is equal to the minimum voltage difference limit is used in this application. It should be understood that during actual application, the fourth threshold may alternatively be set to be greater than the minimum voltage difference limit, to provide some safety margins.

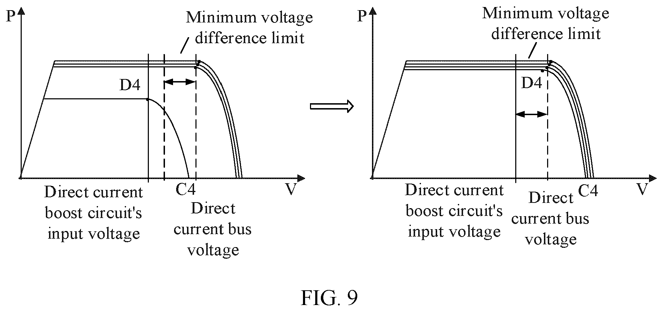

With reference to FIG. 9, in another possible implementation scenario, the optimization mode also needs to be exited due to the minimum voltage difference limit between the input voltage and the output voltage of the direct current boost circuit.

As shown in FIG. 9, a voltage corresponding to a maximum power point D4 of an optimizer connected to one of the direct current boost circuits is low, and is less than the minimum voltage limit of the direct current bus. In this case, the direct current boost circuit needs to perform power conversion to increase the input voltage of the direct current boost circuit, and then output a converted voltage to the direct current bus, to meet the minimum voltage limit of the direct current bus. After a period of time, a power generation capability of a photovoltaic module connected to an optimizer corresponding to a direct current boost circuit with a lowest input voltage may be improved. In this way, the voltage corresponding to the maximum power point D4 of the optimizer connected to the direct current boost circuit increases to above the minimum voltage limit. In this case, the direct current boost circuit continues to perform power conversion, and also performs MPPT. Therefore, the input voltage of the direct current boost circuit gradually moves from an original position to D4 obtained after a power generation environment is improved. However, because the inverter works in optimization mode, at least one direct current boost circuit stops performing power conversion, and the voltage of the direct current bus is determined by a process in which the inverter performs MPPT. After the voltage of the direct current bus is determined, because the direct current boost circuit has the minimum voltage difference limit, the input voltage of the direct current boost circuit performing MPPT gradually moves to D4 as the maximum power point D4 moves rightward after the power generation environment is improved. However, due to the minimum voltage difference limit, the input voltage of the direct current boost circuit is limited to a position at which the difference between the input voltage and the voltage of the direct current bus is exactly equal to the minimum voltage difference limit, to ensure that the direct current boost circuit normally works. It may be understood that in this case, the input voltage of the direct current boost circuit cannot continue to move rightward along with the maximum power point D4. As the power generation environment continues to be improved, the input voltage of the direct current boost circuit is farther away from the maximum power point D4, the direct current boost circuit cannot work at the maximum power point, and the voltage of the direct current bus cannot be decreased to the voltage corresponding to the maximum power point D4. In this case, the optimization mode is not a mode with optimal efficiency of the inverter. Therefore, the controller controls a switching transistor in at least one direct current boost circuit in the inverter to keep turned off. When the inverter circuit works in the MPPT state, if the difference between the input voltage of the direct current boost circuit performing MPPT and the voltage of the direct current bus is close to the minimum voltage difference limit for a continuous period of time, the inverter is controlled to exit the optimization mode, and all direct current boost circuits are enabled to perform MPPT again. After all direct current boost circuits work at the maximum power point, whether to control a switching transistor in at least one direct current boost circuit to keep turned off is determined based on whether the voltage of each direct current boost circuit at the maximum power point meets a condition.

For the foregoing working condition, in an implementation, when controlling the switching transistors in the m direct current boost circuits in the inverter to keep turned off and the inverter circuit to work in the MPPT state, if the difference between the input voltage of the direct current boost circuit and the voltage of the direct current bus is greater than or equal to the fourth threshold and less than or equal to a fifth threshold for a period of time greater than or equal to a second time threshold, the controller in the inverter controls the m direct current boost circuits to work in the MPPT state and the inverter circuit to exit the MPPT state. The fifth threshold is greater than or equal to the fourth threshold. In this way, if a voltage difference of the direct current boost circuit is close to the minimum voltage difference limit for a long time, it is considered that an input voltage at a maximum power point of the direct current boost circuit is higher than an input voltage during actual operation. However, the input voltage of the direct current boost circuit cannot continue to increase due to the minimum voltage difference limit. In this case, the inverter is enabled to exit the optimization mode and work in normal mode again, and all direct current boost circuits are enabled to perform MPPT again. It is determined, based on a new working condition, whether to enable at least one or all of the direct current boost circuits to exit the MPPT state. This ensures proper grouping, to achieve optimal efficiency. It should be understood that during actual application, the fifth threshold may alternatively be set to be equal to the fourth threshold, to increase a requirement for exiting the optimization mode, and prevent frequent exit caused by an excessively loose exit condition. A value of the fifth threshold is not specifically limited in embodiments of this application. For ease of description, an example in which the fifth threshold is equal to the fourth threshold, that is, equal to the minimum voltage difference limit, is used in this application.

In addition to considering adverse impact of the voltage of the direct current bus close to the minimum voltage limit and an excessively small difference between the input voltage and the output voltage of the direct current boost circuit, there is another change in the output P-V curve of each optimizer due to an environmental condition of photovoltaic power generation. Consequently, the working mode of the inverter needs to be re-evaluated to achieve optimal efficiency. However, to enable the controller to learn of a latest output P-V curve characteristic of each optimizer, each direct current boost circuit needs to perform MPPT again, so that an output of each optimizer can better reflect the latest output P-V curve characteristic.

To enable the controller in the inverter to periodically review an optimal working mode of the inverter, the controller may periodically enable the inverter to work in normal mode. In an embodiment, when the switching transistors in the m direct current boost circuits keep turned off for a period of time greater than or equal to a third time threshold, the controller in the inverter controls the m direct current boost circuits to work in the MPPT state and the inverter circuit to exit the MPPT state. In this way, when the inverter works in optimization mode for a long time, it is considered that a factor such as an illumination environment of an optimizer-based photovoltaic power generation system has greatly changed, and the current optimization mode is no longer optimal. A normal working mode is restored, and a next optimization mode is entered based on an actual working condition, to ensure optimal efficiency.

In an implementation, it should be noted that in the foregoing embodiments, working in the MPPT state by the direct current boost circuits and the inverter circuit may be implemented through a perturbation method. The perturbation method is a common method for performing MPPT. When MPPT is performed through the perturbation method, the controller gradually decreases a voltage input by the optimizer from an open-circuit voltage of the optimizer, to find a maximum power point of the optimizer. During this period, the voltage does not jump in large steps, to avoid dropping below the minimum voltage limit of the direct current bus, the minimum voltage difference limit of a direct current conversion circuit, or the like in a specific working condition. The perturbation method can efficiently cooperate with control logic in the foregoing embodiments. In addition, working in the MPPT state by the direct current boost circuits and the inverter circuit may alternatively be implemented through a conductance increment method or the like. A specific implementation of working in the MPPT state is not limited in this application.

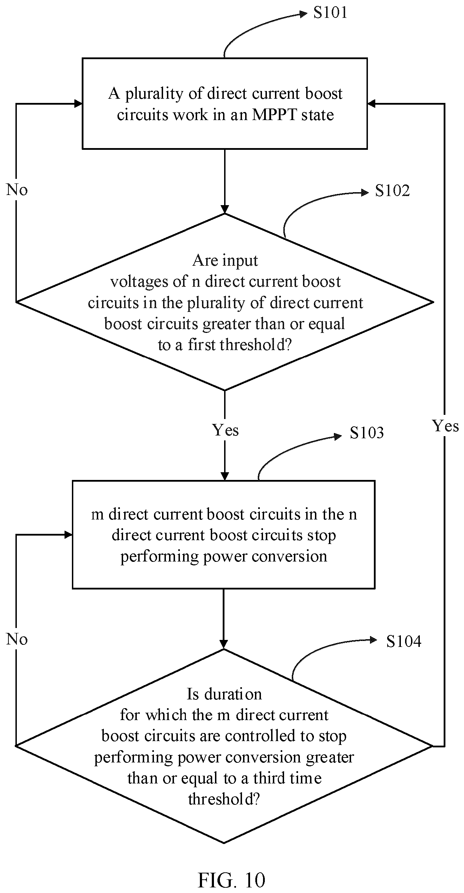

FIG. 10 is a schematic flowchart of inverter control according to an embodiment of this application.

First, step S101 is performed: An inverter first works in normal mode. That is, each direct current boost circuit in the inverter works in an MPPT state, and an input voltage of each direct current boost circuit stabilizes at a maximum power point.

Then, step S102 is performed: It is determined whether input voltages of a plurality of direct current boost circuits meet a condition for entering an optimization mode. If the inverter meets the condition for entering the optimization mode, the inverter is controlled to work in optimization mode. Specifically, it is determined whether input voltages of n direct current boost circuits in the plurality of direct current boost circuits are greater than or equal to a first threshold, that is, whether there is a direct current boost circuit whose input voltage is greater than or equal to the first threshold in the plurality of direct current boost circuits in the inverter. If yes, step S103 is performed. If no, step S101 continues to be performed.

Step S103: The inverter works in optimization mode. Specifically, m direct current boost circuits in the n direct current boost circuits are controlled to stop performing power conversion, that is, switching transistors in at least one or all of the n direct current boost circuits whose input voltages are greater than or equal to the first threshold are controlled to keep turned off.

After step S103 is performed, step S104 is performed.

Step S104: It is determined whether the inverter meets a condition for exiting the optimization mode. If the inverter meets the condition for exiting the optimization mode, the inverter is controlled to work in normal mode. Specifically, it is determined whether duration for which the m direct current boost circuits are controlled to stop performing power conversion is greater than or equal to a third time threshold. If yes, the optimization mode is exited, that is, step S103 stops being performed, and step S101 is performed. If no, S103 continues to be performed.

Determining whether the inverter meets the condition for exiting the optimization mode may also be as described in the foregoing embodiments: determining whether a difference between a voltage of a direct current bus and the first threshold is less than or equal to a third threshold for a period of time greater than or equal to a first time threshold or whether an absolute value of a difference between the input voltage of the direct current boost circuit and the voltage of the direct current bus is greater than or equal to a fourth threshold.

A determining and execution procedure is similar to that in the foregoing embodiments. Details are not described herein again.

The foregoing disclosed embodiments of this application are merely intended to help describe this application. Embodiments do not describe all details in detail, and this application is not limited to the specific implementations. Apparently, many modifications and changes may be made according to the content of embodiments of this application. These embodiments are selected and described in detail in this application, to better explain the principle and actual application of this application, so that a person skilled in the art can well understand and use this application. This application is limited only by the claims and their full scope and equivalents.

## Claims

1. An inverter, comprising a plurality of direct current boost circuits, a direct current bus, an inverter circuit, and a controller, wherein each of the plurality of direct current boost circuits is configured to receive a direct current input from an optimizer connected to one or more photovoltaic modules, perform boost power conversion on the direct current input from the optimizer, and output a converted direct current to the inverter circuit through the direct current bus; and the inverter circuit is configured to receive direct current inputs from the plurality of direct current boost circuits, convert the direct current inputs from the plurality of direct current boost circuits into an alternating current, and output the alternating current to a load or a grid; and
the controller is configured to: when the plurality of direct current boost circuits work in an MPPT state, if input voltages of n direct current boost circuits in the plurality of direct current boost circuits are all greater than or equal to a first threshold, control switching transistors in m direct current boost circuits in the n direct current boost circuits to keep turned off, wherein m and n are integers greater than 0, n ≥ m, and the first threshold is greater than or equal to a minimum voltage limit of the direct current bus.

2. The inverter according to claim 1, wherein the m direct current boost circuits comprise a first direct current boost circuit and a direct current boost circuit whose input voltage differs from an input voltage of the first direct current boost circuit by an absolute value less than or equal to a second threshold in the n direct current boost circuits; and the first direct current boost circuit is a direct current boost circuit with a highest input voltage in the n direct current boost circuits.

3. The inverter according to claim 1 or 2, wherein the controller is further configured to: when a switching transistor in any one of the plurality of direct current boost circuits keeps turned off, control the inverter circuit to work in the MPPT state.

4. The inverter according to claim 3, wherein the controller is configured to: when controlling the inverter circuit to work in the MPPT state, if a difference between a voltage of the direct current bus and the first threshold is less than or equal to a third threshold for a period of time greater than or equal to a first time threshold, control the inverter circuit to exit the MPPT state and the m direct current boost circuits to work in the MPPT state.

5. The inverter according to any one of claims 1 to 4, wherein the controller is configured to control an absolute value of a difference between the input voltage of the direct current boost circuit working in the MPPT state and the voltage of the direct current bus to be greater than or equal to a fourth threshold, and the fourth threshold is greater than or equal to a minimum voltage difference limit of the direct current boost circuit.

6. The inverter according to claim 5, wherein the controller is configured to: when the absolute value of the difference between the input voltage of the direct current boost circuit working in the MPPT state and the voltage of the direct current bus is greater than or equal to the fourth threshold and less than or equal to a fifth threshold for a period of time greater than or equal to a second time threshold, control the m direct current boost circuits to work in the MPPT state and the inverter circuit to exit the MPPT state.

7. The inverter according to any one of claims 1 to 6, wherein when controlling the switching transistors in the m direct current boost circuits to keep turned off for a period of time greater than or equal to a third time threshold, the controller controls the m direct current boost circuits to work in the MPPT state and the inverter circuit to exit the MPPT state.

8. The inverter according to any one of claims 1 to 7, wherein working in the MPPT state is implemented through a perturbation method.

9. An inverter control method, wherein an inverter comprises a plurality of direct current boost circuits, a direct current bus, and an inverter circuit; each of the plurality of direct current boost circuits is configured to receive a direct current input from an optimizer connected to one or more photovoltaic modules, perform boost power conversion on the direct current input from the optimizer, and output a converted direct current to the inverter circuit through the direct current bus; and the inverter circuit is configured to receive direct current inputs from the plurality of direct current boost circuits, convert the direct current inputs from the plurality of direct current boost circuits into an alternating current, and output the alternating current to a load or a grid; and
the method comprises:
when the plurality of direct current boost circuits work in an MPPT state, if input voltages of n direct current boost circuits in the plurality of direct current boost circuits are all greater than or equal to a first threshold, controlling switching transistors in m direct current boost circuits in the n direct current boost circuits to keep turned off, wherein m and n are integers greater than 0, n ≥ m, and the first threshold is greater than or equal to a minimum voltage limit of the direct current bus.

10. The inverter control method according to claim 9, wherein the m direct current boost circuits comprise a first direct current boost circuit and a direct current boost circuit whose input voltage differs from an input voltage of the first direct current boost circuit by an absolute value less than or equal to a second threshold in the n direct current boost circuits; and the first direct current boost circuit is a direct current boost circuit with a highest input voltage in the n direct current boost circuits.

11. The inverter control method according to claim 9 or 10, wherein when a switching transistor in any one of the plurality of direct current boost circuits keeps turned off, the inverter circuit is controlled to work in the MPPT state.

12. The inverter control method according to claim 11, wherein when the inverter circuit works in the MPPT state, if a difference between a voltage of the direct current bus and the first threshold is less than or equal to a third threshold for a period of time greater than or equal to a first time threshold, the inverter circuit is controlled to exit the MPPT state and the m direct current boost circuits are controlled to work in the MPPT state.

13. The inverter control method according to any one of claims 9 to 12, wherein an absolute value of a difference between the input voltage of the direct current boost circuit working in the MPPT state and the voltage of the direct current bus is controlled to be greater than or equal to a fourth threshold, and the fourth threshold is greater than or equal to a minimum voltage difference limit of the direct current boost circuit.

14. The inverter control method according to claim 13, wherein when the absolute value of the difference between the input voltage of the direct current boost circuit working in the MPPT state and the voltage of the direct current bus is greater than or equal to the fourth threshold and less than or equal to a fifth threshold for a period of time greater than or equal to a second time threshold, the m direct current boost circuits are controlled to work in the MPPT state and the inverter circuit is controlled to exit the MPPT state.

15. The inverter control method according to any one of claims 9 to 14, wherein when the switching transistors in the m direct current boost circuits are controlled to keep turned off for a period of time greater than or equal to a third time threshold, the m direct current boost circuits are controlled to work in the MPPT state and the inverter circuit is controlled to exit the MPPT state, and
wherein control of working in the MPPT state is implemented through a perturbation method.
